# EUROPEAN PATENT APPLICATION

(11) **EP 4 644 222 A1**
(43) Date of publication of application: **05.11.2025**
(21) Application number: 24766253.9
(22) Date of filing: 18.02.2024
(51) Int. Cl.: B62M 6/50, G01L 5/00

(54) **WIRELESS TRANSMISSION BICYCLE CRANKSET SPOKE-TYPE TORQUE SENSOR**

(30) Priority: 06.03.2023 CN 202320402780 U
(71) Applicant: Shanghai Weixi Power Technology Co., Ltd, Shanghai 201716 (CN)
(72) Inventor: JIANG, Jinheng, Suzhou, Jiangsu 215332 (CN); ZHU, Shijie, Suzhou, Jiangsu 215332 (CN)
(74) Representative: Chung, Hoi Kan
(86) International application number: PCT/CN2024/077340
(87) International publication number: WO 2024/183531

(57) **Abstract**

Disclosed is a wireless transmission bicycle crankset spoke-type torque sensor, which belongs to the field of bicycles. The torque sensor comprises a five-way-end stationary circuit housing (1). The structural feature of the torque sensor lies in further comprising a power source transmitting coil (3), a power source induction receiving coil (4), a resistance strain gauge (5), a stationary circuit board (7), a sensor torque signal receiving circuit (8), a spoke-type elastomer (12), a sensor torque signal transmitting circuit (13), a power source induction receiving modulation circuit unit (14), a rotating torque circuit board (17), a Hall element (18) and a magnetic ring (19), wherein the stationary circuit board (7) is arranged inside the five-way-end stationary circuit housing (1); the power source transmitting coil (3), the sensor torque signal receiving circuit (8) and the Hall element (18) are arranged on the stationary circuit board (7); the rotating torque circuit board (17) and the resistance strain gauge (5) are both arranged on the spoke-type elastomer (12); and the power source induction receiving coil (4), the sensor torque signal transmitting circuit (13), the power source induction receiving modulation circuit unit (14) and the magnetic ring (19) are arranged on the rotating torque circuit board (17).

## Description

### TECHNICAL FIELD

This disclosure relates to a wireless transmission bicycle crankset spoke-type torque sensor, which belongs to the field of bicycles.

### BACKGROUND

Bicycles are a means of transportation for people's daily lives. By installing a spoke-type elastomer on a bicycle crankset, the magnitude of pedaling force produced by riders can be sensed and detected anytime and anywhere, and the detected magnitude of force can be converted into an electrical signal and transmitted to a torque sensor in a controller in a wireless transmission (noncontact) manner. In the prior art, resistance strain gauges are usually attached to the front of a spoke bar. However, due to the large area of the front of the spoke bar, the resistance strain gauges fail to easily sense the deformation of the spoke-type elastomer, leading to insensitive sensing.

### SUMMARY

This disclosure aims to provide a wireless transmission bicycle crankset spoke-type torque sensor with a reasonable structural design, in order to overcome the above-mentioned shortcomings in the prior art.

A technical solution adopted by this disclosure to solve the above problems is: the wireless transmission bicycle crankset spoke-type torque sensor includes a five-way-end stationary circuit housing. The structural feature of the torque sensor lies in further including a power source transmitting coil, a power source induction receiving coil, resistance strain gauges, a stationary circuit board, a sensor torque signal receiving circuit, a spoke-type elastomer, a sensor torque signal transmitting circuit, a power source induction receiving modulation circuit unit, a rotating torque circuit board, a Hall element and a magnetic ring, where the stationary circuit board is arranged inside the five-way-end stationary circuit housing; the power source transmitting coil, the sensor torque signal receiving circuit and the Hall element are arranged on the stationary circuit board; the rotating torque circuit board and the resistance strain gauges are both arranged on the spoke-type elastomer; and the power source induction receiving coil, the sensor torque signal transmitting circuit, the power source induction receiving modulation circuit unit and the magnetic ring are arranged on the rotating torque circuit board.

Further, the wireless transmission bicycle crankset spoke-type torque sensor further includes a power source signal transmission line, where the power source signal transmission line is connected to the stationary circuit board, the power source transmitting coil is connected to the power source induction receiving coil, the resistance strain gauges are connected to the sensor torque signal transmitting circuit, the sensor torque signal transmitting circuit is connected to the sensor torque signal receiving circuit, and the magnetic ring is connected to the Hall element.

Further, the power source induction receiving coil is arranged parallel to the power source transmitting coil with a spacing of 2-5 mm, and the magnetic ring is arranged parallel to the Hall element.

Further, the five-way-end stationary circuit housing is installed on a five-way of a bicycle through a housing fastening screw.

Further, a stationary circuit housing sealing plate is installed on the five-way-end stationary circuit housing.

Further, a crankset outer casing and a crankset inner casing are installed on both sides of the spoke-type elastomer, respectively.

Further, the spoke-type elastomer is provided with crank fixing screw holes, and the crank fixing screw holes are connected to a crank.

Further, the spoke-type elastomer is provided with chainring installation screw holes, and the chainring installation screw holes are connected to a crankset.

Further, the spoke-type elastomer includes a hub, a rim, and spoke bars, the hub and the rim are arranged from inside to outside, two ends of each of the spoke bars are connected to an outer ring of the hub and an inner ring of the rim, respectively, and the resistance strain gauges are arranged on side walls of the spoke bars.

Further, the hub is provided with the crank fixing screw holes, and the rim is provided with the chainring installation screw holes.

Compared with the prior art, this disclosure has the following advantages: in the wireless transmission bicycle crankset spoke-type torque sensor, the resistance strain gauges are attached to the side walls of the spoke bars, allowing the resistance strain gauges to easily sense the deformation of the spoke-type elastomer. When the hub and the rim rotate in opposite directions, the spoke bars will be bent and deformed, causing a change in resistance values of the resistance strain gauges, thus improving the sensitivity of the resistance strain gauges.

### BRIEF DESCRIPTION OF THE DRAWINGS

FIG. 1 is a schematic diagram of a sectional structure of a wireless transmission bicycle crankset spoke-type torque sensor according to an embodiment of this disclosure.
FIG. 2 is a schematic diagram of a side-view structure of a wireless transmission bicycle crankset spoke-type torque sensor according to an embodiment of this disclosure.
FIG. 3 is a schematic diagram of circuit connection of a wireless transmission bicycle crankset spoke-type torque sensor according to an embodiment of this disclosure.

In the figures: five-way-end stationary circuit housing 1, housing fastening screw 2, power source transmitting coil 3, power source induction receiving coil 4, resistance strain gauge 5, crankset outer casing 6, stationary circuit board 7, sensor torque signal receiving circuit 8, power source signal transmission line 9, stationary circuit housing sealing plate 10, crankset inner casing 11, spoke-type elastomer 12, sensor torque signal transmitting circuit 13, power source induction receiving modulation circuit unit 14, crank fixing screw hole 15, chainring installation screw hole 16, rotating torque circuit board 17, Hall element 18, magnetic ring 19, hub 20, rim 21, spoke bar 22, detection circuit 23, amplification circuit 24, power source transmitting modulation circuit unit 25.

### DETAILED DESCRIPTION OF THE EMBODIMENTS

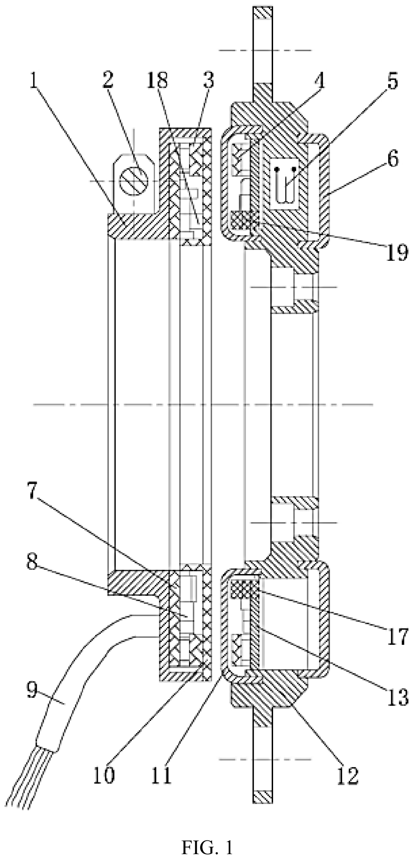

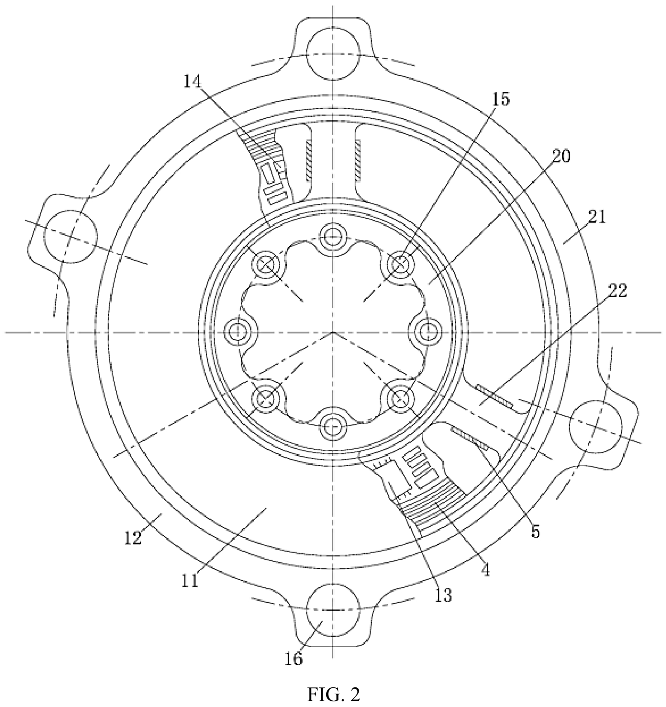

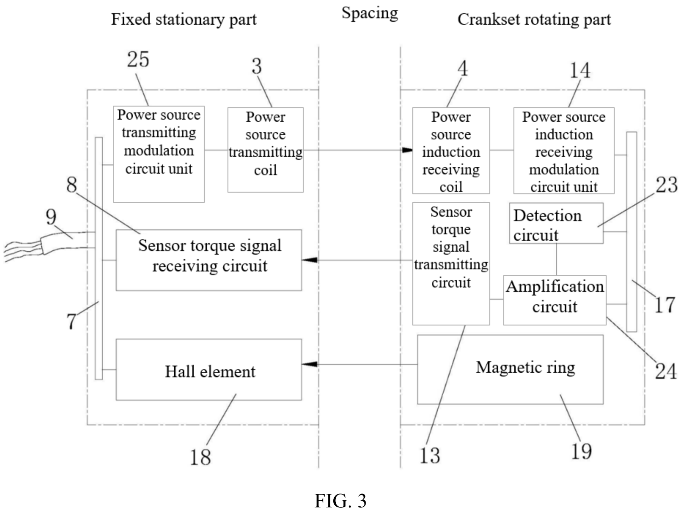

An embodiment is shown in FIG. 1 to FIG. 3.

A wireless transmission bicycle crankset spoke-type torque sensor in this embodiment includes a five-way-end stationary circuit housing 1, a power source transmitting coil 3, a power source induction receiving coil 4, resistance strain gauges 5, a stationary circuit board 7, a sensor torque signal receiving circuit 8, a power source signal transmission line 9, a spoke-type elastomer 12, a sensor torque signal transmitting circuit 13, a power source induction receiving modulation circuit unit 14, a rotating torque circuit board 17, a Hall element 18 and a magnetic ring 19.

The five-way-end stationary circuit housing 1 in this embodiment is installed on a five-way of a bicycle through a housing fastening screw 2; a stationary circuit housing sealing plate 10 is installed on the five-way-end stationary circuit housing 1; a crankset outer casing 6 and a crankset inner casing 11 are installed on both sides of the spoke-type elastomer 12, respectively; the spoke-type elastomer 12 is provided with crank fixing screw holes 15, and the crank fixing screw holes 15 are connected to a crank; and the spoke-type elastomer 12 is provided with chainring installation screw holes 16, and the chainring installation screw holes 16 are connected to a crankset.

The stationary circuit board 7 in this embodiment is arranged inside the five-way-end stationary circuit housing 1; the power source transmitting coil 3, the sensor torque signal receiving circuit 8 and the Hall element 18 are arranged on the stationary circuit board 7; the rotating torque circuit board 17 and the resistance strain gauges 5 are both arranged on the spoke-type elastomer 12; and the power source induction receiving coil 4, the sensor torque signal transmitting circuit 13, the power source induction receiving modulation circuit unit 14 and the magnetic ring 19 are arranged on the rotating torque circuit board 17.

The power source signal transmission line 9 in this embodiment is connected to the stationary circuit board 7, the power source transmitting coil 3 is connected to the power source induction receiving coil 4, the power source induction receiving coil 4 is arranged parallel to the power source transmitting coil 3 with a spacing of 2-5 mm, the resistance strain gauges 5 are connected to the sensor torque signal transmitting circuit 13, the sensor torque signal transmitting circuit 13 is connected to the sensor torque signal receiving circuit 8, the magnetic ring 19 is connected to the Hall element 18, and the magnetic ring 19 is arranged parallel to the Hall element 18.

The spoke-type elastomer 12 in this embodiment includes a hub 20, a rim 21, and spoke bars 22, the hub 20 and the rim 21 are arranged from inside to outside, two ends of each of the spoke bars 22 are connected to an outer ring of the hub 20 and an inner ring of the rim 21, respectively, the resistance strain gauges 5 are arranged on side walls of the spoke bars 22, the hub 20 is provided with the crank fixing screw holes 15, and the rim 21 is provided with the chainring installation screw holes 16.

Specifically, as shown in FIG. 1, the five-way-end stationary circuit housing 1 is combined with the spoke-type elastomer 12 to form the wireless transmission bicycle crankset spoke-type torque sensor (hereinafter referred to as a torque sensor). The left part shown in FIG. 1 involves that an inner hole of the five-way-end stationary circuit housing 1 is fitted into an outer circle of the five-way and is tightened with the housing fastening screw 2, such that the five-way-end stationary circuit housing 1 is fastened to the five-way of the bicycle and is fixedly coupled with the bicycle as a whole. The main working content and functions of the stationary circuit board 7 fixedly coupled to the five-way-end stationary circuit housing 1 include two aspects: the first one is to transmit a power source signal input by the power source signal transmission line 9 through the power source transmitting coil 3, so that the power source induction receiving coil 4 inside the spoke-type elastomer 12 that is close to and parallel to the five-way-end stationary circuit housing 1 can sense and receive the power source signal, thereby achieving wireless transmission of power utilized by an internal circuit of the torque sensor. The second one is to wirelessly receive a signal from an internal circuit of the spoke-type elastomer 12 that sends a torque signal detected by the torque sensor in a wireless transmission manner, and to send the wirelessly received torque sensor signal to the controller for use through the power source signal transmission line 9 after being sorted by the internal circuit.

The structure and functional content of the other part taking the spoke-type elastomer 12 as a carrier are explained as follows:
The spoke-type elastomer 12 is composed of the hub 20, the rim 21, and the spoke bars 22. Four chainring installation screw holes 16 in the rim 21 can be selectively assembled with the cranksets that are made of different materials and have different numbers of teeth. Eight crank fixing screw holes 15 in the hub 20 are used for locking the spoke-type elastomer 12 onto the crank adapted thereto, so that the torque sensor is integrated with the right crank of the bicycle, while the spoke bars 22 are located between the hub 20 and the rim 21. The resistance strain gauges 5 are attached to the spoke bars 22, and the resistance strain gauges 5 attached to a plurality of spoke bars 22 form a bridge as needed. When the hub 20 and the rim 21 rotate in opposite directions, the spoke bars 22 will be bent and deformed, causing a change in resistance values of the resistance strain gauges 5, and further causing a change in balanced voltage of the bridge. The detection circuit 23 of the torque sensor amplifies the electrical signal proportional to the change in the amplitude of torque force, and then sends the amplified electrical signal to the sensor torque signal transmitting circuit 13 which then sends the signal in a wireless transmission manner.

The rotating torque circuit board 17 is a circular ring type circuit board that comprehensively integrates all electronic circuit components of a rotating part of the torque sensor, and is installed with the power source induction receiving coil 4 that is corresponding to and parallel to the stationary circuit board 7. That is, the power source induction receiving coil 4 is kept corresponding to and parallel to the power source transmitting coil 3 installed on the stationary circuit board 7, with a spacing therebetween being kept in a range of 2-5 mm, so as to realize a good effect of wireless induction transmission of the power source signal. The rotating torque circuit board 17 is integrally installed and fixed on the spoke-type elastomer 12 and can be enclosed by the crankset inner casing 11, providing protection measures of preventing dust, rainwater, and collision and scratches for the rotating part. Other functional circuits installed on the rotating torque circuit board 17 include the detection circuit 23 and the amplification circuit 24 of the torque sensor. These circuits convert information sensed by the resistance strain gauges 5 into an electrical signal, amplify the signal, and then send the signal to the sensor torque signal transmitting circuit 13, enabling the torque electrical signal inside a rotating body to be wirelessly transmitted to the sensor torque signal receiving circuit 8 on the stationary circuit board 7 for reception. In addition to the power source induction receiving coil 4 fixedly installed on the rotating torque circuit board 17, there is also a power source induction receiving modulation circuit unit 14 which converts the power source signal obtained from the induction coil into a DC voltage power source signal for supplying power to all electronic components inside the rotating body for operation.

The magnetic ring 19 is installed and fixed on the rotating torque circuit board 17 and is corresponding to and parallel to a position of the Hall element 18 installed and fixed on the stationary circuit board 7. When the torque sensor rotates, the magnetic ring 19 rotates synchronously therewith, and at this time, the corresponding and parallel Hall element 18 on the stationary circuit board 7 senses a magnetic pole transmitting signal generated by the magnetic ring 19 from the rotating body. The Hall element 18 on the stationary circuit board 7 transmits this electrical signal in the form of an electrical signal at a pulse frequency through the power source signal transmission line 9, and this circuit is a pedaling frequency detection circuit, which records and displays a frequency of pedaling a cycle by a human foot as well as a cumulative number of pedaling cycles, with backward pedaling generating no signal.

The crankset outer casing 6 is installed and fixed on the spoke-type elastomer 12 on the right crank side to play a role in preventing rainwater, dust, and collision and scratches on the internal structure of the torque sensor.

The stationary circuit housing sealing plate 10 is fixedly installed on the five-way-end stationary circuit housing 1 to play a role of protecting the internal circuit structure and preventing rainwater, dust, and scratches.

That is to say, an external DC5V power source is transmitted from the power source signal transmission line 9 to be supplied to the stationary circuit board 7. The stationary circuit board 7 is provided with a power source transmitting modulation circuit unit 25 which modulates a voltage that needs to be wirelessly transmitted into a pulsating frequency signal that can be transmitted through the power source transmitting coil 3 and then transmits the signal from the power source transmitting coil 3. At this time, a receiving coil of the power source induction receiving coil 4 in the crankset outer casing 6 of a crankset rotating part, which is separated from and parallel to the power source transmitting coil 3 of a fixed stationary part, receives the power source signal from the power source transmitting coil 3, and immediately converts the power source signal into a voltage through the power source induction receiving modulation circuit unit 14 for use by various units of the crankset rotating part.

The detection circuit 23 of the torque sensor mainly consists of the resistance strain gauges 5. A plurality of resistance strain gauges 5 attached to the spoke bars 22 of the spoke-type elastomer 12 form a full-bridge detection circuit on the rotating torque circuit board 17. An electrical signal measured by the detection circuit is amplified by the amplification circuit 24 to a voltage amplitude required by a wireless transmitting circuit, and then sent to the sensor torque signal transmitting circuit 13. The sensor torque signal transmitting circuit 13 modulates the signal and then wirelessly transmits the signal. At this time, the sensor torque signal receiving circuit 8 inside the fixed stationary part corresponding to the crankset rotating part will receive a wireless transmission signal of a sensor torque voltage from the crankset rotating part, which will be synchronously converted into a voltage signal that can be applied by the control system and sent to the corresponding controller through the power source signal transmission line 9.

The magnetic ring 19 is installed on the rotating torque circuit board 17. The magnetic ring 19 is arranged at intervals of N and S poles along the entire circumference as needed. When the magnetic ring 19 rotates with the rotating torque circuit board 17, the pedaling frequency signal detection circuit composed of the Hall element 18 inside the stationary circuit board 7 correspondingly fixed on a bicycle frame will sense a rotating signal, the number of pulses per cycle obtained by the Hall element 18, the speed and frequency of medical history pedal rotation, and positive and negative rotation discrimination functions, i.e., forward pedaling generating signals while backward pedaling generating no signal during riding.

## Claims

1. A wireless transmission bicycle crankset spoke-type torque sensor, comprising a five-way-end stationary circuit housing (1), and further comprising a power source transmitting coil (3), a power source induction receiving coil (4), resistance strain gauges (5), a stationary circuit board (7), a sensor torque signal receiving circuit (8), a spoke-type elastomer (12), a sensor torque signal transmitting circuit (13), a power source induction receiving modulation circuit unit (14), a rotating torque circuit board (17), a Hall element (18) and a magnetic ring (19), wherein the stationary circuit board (7) is arranged inside the five-way-end stationary circuit housing (1); the power source transmitting coil (3), the sensor torque signal receiving circuit (8) and the Hall element (18) are arranged on the stationary circuit board (7); the rotating torque circuit board (17) and the resistance strain gauges (5) are both arranged on the spoke-type elastomer (12); and the power source induction receiving coil (4), the sensor torque signal transmitting circuit (13), the power source induction receiving modulation circuit unit (14) and the magnetic ring (19) are arranged on the rotating torque circuit board (17).

2. The wireless transmission bicycle crankset spoke-type torque sensor according to claim 1, further comprising a power source signal transmission line (9), wherein the power source signal transmission line (9) is connected to the stationary circuit board (7), the power source transmitting coil (3) is connected to the power source induction receiving coil (4), the resistance strain gauges (5) are connected to the sensor torque signal transmitting circuit (13), the sensor torque signal transmitting circuit (13) is connected to the sensor torque signal receiving circuit (8), and the magnetic ring (19) is connected to the Hall element (18).

3. The wireless transmission bicycle crankset spoke-type torque sensor according to claim 1, wherein the power source induction receiving coil (4) is arranged parallel to the power source transmitting coil (3) with a spacing of 2-5 mm, and the magnetic ring (19) is arranged parallel to the Hall element (18).

4. The wireless transmission bicycle crankset spoke-type torque sensor according to claim 1, wherein the five-way-end stationary circuit housing (1) is installed on a five-way of a bicycle through a housing fastening screw (2).

5. The wireless transmission bicycle crankset spoke-type torque sensor according to claim 1, wherein a stationary circuit housing sealing plate (10) is installed on the five-way-end stationary circuit housing (1).

6. The wireless transmission bicycle crankset spoke-type torque sensor according to claim 1, wherein a crankset outer casing (6) and a crankset inner casing (11) are installed on both sides of the spoke-type elastomer (12), respectively.

7. The wireless transmission bicycle crankset spoke-type torque sensor according to claim 1, wherein the spoke-type elastomer (12) is provided with crank fixing screw holes (15), and the crank fixing screw holes (15) are connected to a crank.

8. The wireless transmission bicycle crankset spoke-type torque sensor according to claim 1, wherein the spoke-type elastomer (12) is provided with chainring installation screw holes (16), and the chainring installation screw holes (16) are connected to a crankset.

9. The wireless transmission bicycle crankset spoke-type torque sensor according to claim 1, wherein the spoke-type elastomer (12) comprises a hub (20), a rim (21), and spoke bars (22), the hub (20) and the rim (21) are arranged from inside to outside, two ends of each of the spoke bars (22) are connected to an outer ring of the hub (20) and an inner ring of the rim (21), respectively, and the resistance strain gauges (5) are arranged on side walls of the spoke bars (22).

10. The wireless transmission bicycle crankset spoke-type torque sensor according to claim 9, wherein the hub (20) is provided with the crank fixing screw holes (15), and the rim (21) is provided with the chainring installation screw holes (16).
